Europäisches Patentamt

European Patent Office

Office européen des brevets

(11) Veröffentlichungsnummer: **0 101 078**
**A2**

(12) # EUROPÄISCHE PATENTANMELDUNG

(21) Anmeldenummer: **83107967.8**

(51) Int. Cl.³: **G 02 B 7/26**
**G 01 N 21/00**

(22) Anmeldetag: **11.08.83**

(30) Priorität: **17.08.82 DE 3230570**

(43) Veröffentlichungstag der Anmeldung:
**22.02.84 Patentblatt 84/8**

(84) Benannte Vertragsstaaten:
**CH DE FR GB LI**

(71) Anmelder: **SIEMENS AKTIENGESELLSCHAFT**
**Berlin und München Wittelsbacherplatz 2**
**D-8000 München 2(DE)**

(72) Erfinder: **Winzer, Gerhard, Dr.**
**Zugspitzstrasse 10**
**D-8011 Putzbrunn(DE)**

(72) Erfinder: **Mahlein, Hans, Dr.**
**Queristrasse 2**
**D-8025 Unterhaching(DE)**

(54) Sende- und Empfangseinrichtung für ein faseroptisches Sensorsystem.

(57) Es wird eine Sende- und Empfangseinrichtung (1) für ein mit zwei Wellenlängen arbeitendes faseroptisches Sensorsystem beschrieben, bei der Licht einer ersten Wellenlänge und Licht einer zweiten Wellenlänge über Einkoppelfasern (10, 20) eines faseroptischen Verzweigers einer Faserstrecke (2) des Sensorsystems zugeführt wird und bei dem über die Faserstrecke (2) zurückkommendes Licht über eine Auskoppelfaser (40) des Verzweigers (A) einer Auswerteeinrichtung zugeführt ist. Der Verzweiger (A) ist so ausgebildet, daß der größte Teil des zurückkommenden Lichts über die Auskoppelfaser (40) ausgekoppelt wird. Zwei vorteilhafte Ausführungsformen eines solchen Verzweigers, von denen die eine in Form eines nicht frequenzselektiven, asymetrischen Viertor-Verzweigers und die andere in Form eines frequenzselektiven Fünftor-Verzweigers ausgebildet ist, werden beschrieben.

FIG 1

SIEMENS AKTIENGESELLSCHAFT

Berlin und München

Unser Zeichen
VPA 82 P 1671 E

Sende- und Empfangseinrichtung für ein faseroptisches
Sensorsystem

Die vorliegende Erfindung betrifft eine Sende- und Empfangseinrichtung für ein mit zwei Wellenlängen arbeitendes faseroptisches Sensorsystem nach dem Oberbegriff des Patentanspruchs 1.

Ein faseroptisches Sensorsystem mit einer Sende- und Empfangseinrichtung der genannten Art ist aus der EP 00 54 292 bekannt. Bei dieser Sende- und Empfangseinrichtung strahlt ein Sender in Form einer Lichtquelle Licht mit einer ersten Wellenlänge und zugleich Licht mit einer zweiten Wellenlänge ab. Das abgestrahlte Licht wird in im wesentlichen freier Strahlausbreitung durch zwei teildurchlässige Spiegel dem senderseitigen Ende der Faserstrecke des Sensorsystems zugeführt. Das von diesem Ende austretende Licht mit der ersten Wellenlänge und das ebenfalls aus diesem Ende austretende Licht mit der zweiten Wellenlänge wird ebenfalls in im wesentlichen freier Strahlausbreitung über die Strahlteilerspiegel und gegebenenfalls über Schmalbandfilter der zugeordneten Auswerteeinrichtung zugeführt.

Die beiden Strahlteilerspiegel bedeuten einen relativ hohen Verlust, der sich bei der Wirkungsweise des bekannten Sensorsystems auf 9 dB für das als Meßlicht verwendete Licht mit der zweiten Wellenlänge und auf 12 dB für das als Referenzlicht verwendete Licht mit der ersten Wellenlänge beläuft.

Ed 1 Sti/17.8.1982

Wegen der im wesentlichen freien Strahlausbreitung sind bei der bekannten Sende- und Empfangseinrichtung auch noch Linsen zur Strahlformung und effektiven Lichteinkopplung in die Faserstrecke erforderlich, so daß der optische Teil dieser Sende- und Empfangseinrichtung mit diesen Linsen und den diversen Spiegel- und Filterplättchen kompliziert im Aufbau ist und erheblichen Herstellungsaufwand erfordert.

Aufgabe der vorliegenden Erfindung ist es daher, eine Sende- und Empfangseinrichtung der eingangs genannten Art anzugeben, die vergleichsweise einfach aufgebaut und herstellbar ist.

Diese Aufgabe wird durch die im kennzeichnenden Teil des Patentanspruchs 1 angegebenen Merkmale gelöst.

Diese Lösung hat den Vorteil, daß alle optischen Komponenten in der Sende- und Empfangseinrichtung die Lichtleitung in Lichtwellenleitern, insbesondere in Glasfasern, ausnutzen. Bereiche mit freier Strahlausbreitung existieren nicht mehr. Demzufolge läßt sich der optische Teil der erfindungsgemäßen Sende- und Empfangseinrichtung sehr klein und kompakt mit der Technologie der Mikrooptik realisieren.

Eine erste zweckmäßige Ausführungsform einer erfindungsgemäßen Sende- und Empfangseinrichtung weist die im Anspruch 2 angegebenen Merkmale auf. Der in dieser Ausführungsform enthaltene Wellenlängen-Demultiplexer kann beispielsweise ein Baustein sein, wie er in Appl. Opt. 20 (1981) S. 3128 - 3135 ausführlich beschrieben ist oder ein ähnlicher Baustein. Er enthält beispielsweise im Faserweg nur ein dielektrisches Kantenfilter.

Wenn besonders hohe Anforderungen an die Meßgenauigkeit gestellt werden, ist es zweckmäßig, die erste Ausführungsform nach Anspruch 2 so weiterzubilden, wie es im Anspruch 3 angegeben ist. Es kann dafür eine Variante des genannten Wellenlängen-Demultiplexer-Bausteins verwendet werden, der neben dem Kantenfilter zusätzliche Schmalbandfilter aufweist.

Eine besonders vorteilhafte Ausgestaltung der ersten Ausführungsform einer erfindungsgemäßen Einrichtung ist im Anspruch 4 angegeben. Der Verzweiger und Wellenlängen-Demultiplexer können hierbei als ein einziger kompakter Baustein ausgeführt werden.

Eine zweite zweckmäßige Ausführungsform einer erfindungsgemäßen Sende und Empfangseinrichtung ist im Anspruch 5 angegeben. Die notwendige Trennung des Lichts mit den unterschiedlichn Wellenlängen wird bei dieser Ausführungsform in der Diodenanordnung mit übereinander integrierten Dioden durchgeführt. Derartige Diodenanordnungen sind u.a. in Proc. Europ. Conf. Optical Commun., München, 1977, S. 173-175 und Jpn. J. Appl. Phys. 19, Suppl. 19-2 (1980) S. 213-216 beschrieben.

Eine bevorzugte Ausgestaltung der zweiten Ausführungsform einer erfindungsgemäßen Einrichtung geht aus dem Anspruch 6 hervor.

Eine dritte Ausführungsform einer erfindungsgemäßen Sende- und Empfangseinrichtung ist im Anspruch 7 angegeben.

Insbesondere bei Anwendung dieser dritten Ausführungsform in einem Sensorsystem, wie es in der genannten EP 00 54 292 beschrieben ist, ist es zweckmäßig, diese Ausführungsform so auszugestalten, wie es im Anspruch 8 oder auch im Anspruch 9 angegeben ist. Dadurch wird ein besonders einfacher Aufbau ermöglicht und es kann vermieden werden, daß unterschiedliches Verhalten der Faserstrecke für Licht verschiedener Wellenlängen zum Tragen kommt. Eine Kompensation mit Hilfe des Referenzlichtes als Eichreferenz ist nahezu ideal. Außerdem liegen alle Anteile des Spektrums der Lumineszenzdiode in einem verhältnismäßig engen Spektralbereich.

Es sei darauf hingewiesen, daß die Verwendung unterschiedlicher Anteile eines Lumineszenzdioden-Spektrums für die Nachrichtenübertragung in Trans. IECE Japan E63 (1980) S. 770-771 und Proc. Europ. Conf. Optical Commun., Kopenhagen, (1981) 17.4-1 - 17.4-4 bereits beschrieben ist.

Abgesehen von dem bei der dritten Ausführungsform und deren Ausgestaltungen gegebenen einfachen Meßprinzip sind auch die auftretenden optischen Einfügeverluste sehr niedrig.

Ein vorteilhafter, insbesondere für eine erfindungsgemäße Sende- und Empfangseinrichtung geeigneter Verzweiger ist im Anspruch 10 angegeben. Es sei darauf hingewiesen, daß dieser neuartige faseroptische Verzweiger nicht auf die Anwendung in einer Sende- und Empfangseinrichtung beschränkt ist, sondern auch anderswo vorteilhaft verwendet werden kann.

In einer erfindungsgemäßen Sende- und Empfangseinrichtung wird der faseroptische Verzweiger nach Anspruch 10 aber zweckmäßigerweise so angeordnet, wie es im Anspruch 11 angegeben ist.

- 5 -    VPA    82 P 1671 E

Im Anspruch 12 ist ein vorteilhafter, insbesondere für eine erfindungsgemäße Sende- und Empfangseinrichtung geeigneter wellenlängenselektiver Verzweiger angegeben.

Auch dieser Verzweiger ist nicht auf die Anwendung in Sende- und Empfangseinrichtungen beschränkt, sondern kann auch anderswo angewendet werden.

In der erfindungsgemäßen Sende- und Empfangseinrichtung nach Anspruch 4 wird dieser fünftorige Verzweiger zweckmäßigerweise so angeordnet, wie es im Anspruch 13 angegeben ist.

Die Ansprüche 14 und 15 geben vorteilhafte und bevorzugte Ausführungsformen eines erfindungsgemäßen faseroptischen Verzweigers oder fünftorigen wellenlängenselektiven Verzweigers an.

Die erfindungsgemäßen Verzweiger sind durchweg asymmetrische Verzweiger, d.h. sie verwenden voneinander verschiedene Fasern, insbesondere mit verschiedenen Durchmessern. Sie zeichnen sich durch einfachen Aufbau, einfache Herstellungsmöglichkeit und geringe Einfügeverluste aus.

Im folgenden wird die Erfindung beispielhaft anhand der beigefügten Zeichnungen näher erläutert. Von den Figuren zeigen:

Die Figuren 1 bis 4 in schematischer Darstellung Sensorsysteme nach Art der EP 00 54 292 mit einer erfindungsgemäßen Sende- und Empfangseinrichtung, wobei die Figur 1 eine erste Ausführungsform, die Figur 2 eine zweite Ausführungsform und die Figuren 3 und 4 jeweils eine dritte Ausführungsform der

0101078

erfindungsgemäßen Sende- und Empfangseinrichtung darstellen;

Figur 5 schematisch in perspektivischer Darstellung einen erfindungsgemäßen Abzweig mit vier Toren, wie er in den Ausführungsformen nach den Figuren 1 bis 5 verwendet werden kann, wobei zugleich die Ansicht eines Querschnitts durch die geschliffene Dickkernfaser und die angelegten dünneren Fasern in der Nähe der ungeschliffenen Dickkernfaser dargestellt ist; und

Figur 6 eine Seitenansicht eines erfindungsgemäßen fünftorigen wellenlängenselektiven Verzeigers, wobei zugleich die Stirnflächen der verschiedenen Fasern, welche die Tore bilden, in Draufsicht dargestellt sind.

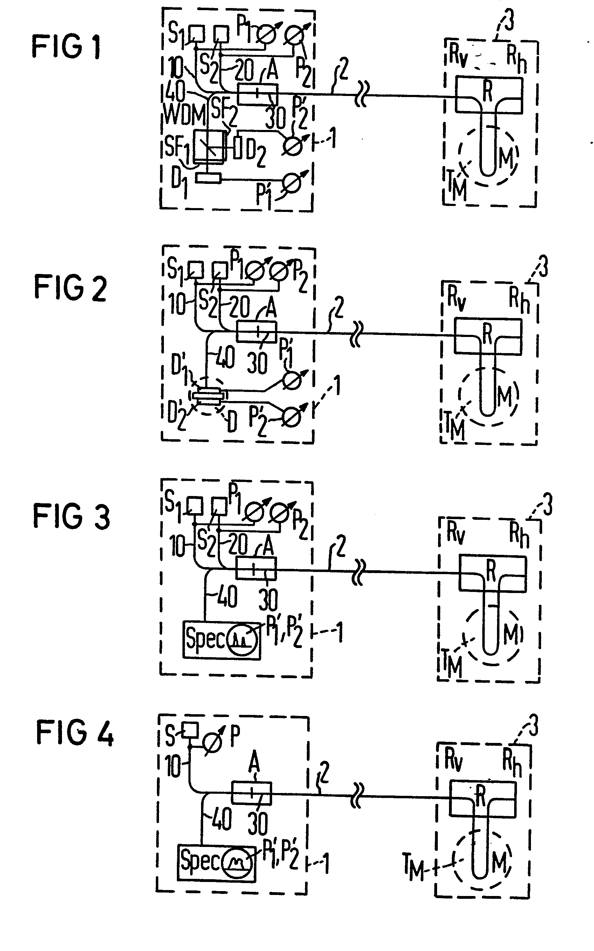

In den Sensorsystemen nach den Figuren 1 bis 4 ist jeweils die Sende- und Empfangseinrichtung mit 1, die Faserstrecke mit 2 und der Sensor mit 3 bezeichnet. Der Sensor 3 umfaßt eine Sensorzelle R mit einem Einkoppelspiegel $R_v$, durch den das Referenzlicht vom Meßlicht in bekannter Weise abgetrennt wird, d.h. das Referenzlicht läuft die Faserstrecke 2 zur Sende- und Empfangseinrichtung 1 zurück, während das Meßlicht eine Meßzone M durchläuft, auf einen Rückkoppelspiegel $R_h$ trifft, und von dort durch die Meßzone M und die Faserstrecke 2 zur Sende- und Empfangseinrichtung 1 zurückläuft. In der Meßzone M durchläuft das Meßlicht ein Medium, dessen Transmission $T_M$ von einer Meßgröße x abhängt. Das zur Sende- und Empfangseinrichtung zurückgelangende Licht ist um einen Faktor $T_M2$ geschwächt, weil die Meßzone M zweimal durchlaufen wird.

Näher soll auf den Sensor 3 nicht eingegangen werden. Es darf in diesem Zusammenhang auf die EP 00 54 292 verwiesen werden.

Die Sende- und Empfangseinrichtung 1 weist in den Ausführungsformen nach den Figuren 1 bis 3 zwei Lichtquellen $S_1$ und $S_2$ auf, von denen beispielsweise die Lichtquelle $S_1$ das Referenzlicht mit einer ersten Wellenlänge $\lambda_1$ und die Lichtquelle $S_2$ das Meßlicht mit einer zweiten Wellenlänge $\lambda_2$ aussendet. Die von den Lichtquellen $S_1$ und $S_2$ abgegebenen Lichtleistungen $P_1$ bzw. $P_2$ werden zweckmäßigerweise durch Meßinstrumente überwacht.

Das Meßlicht wird durch eine Faser 20 und das Referenzlicht durch eine Faser 10 einem faseroptischen Verzweiger A zugeführt, in welchem das Meßlicht und das Referenzlicht in einer Faser 30 vereinigt wird, an welche die Faserstrecke 2 angeschlossen ist. Die Faser 30 und die Faserstrecke 2 können aus einer einzigen Faser bestehen.

Der faseroptische Verzweiger A ist so aufgebaut, daß der durch die Faserstrecke 2 zur Sende- und Empfangseinrichtung 1 zurückkehrende Anteil des Referenzlichts und des Meßlichtes zum größten Teil in eine an die Faser 30 angeschlossene Faser 40 und nur zu einem geringen Teil in die zu den Lichtquellen führenden Fasern 10 und 20 eingekoppelt wird.

An die Faser 40 ist eine Auswerteeinrichtung angeschlossen, in welcher die Leistung $P_1'$ des zur Sende- und Empfangseinrichtung 1 zurückgelangenden Anteil des Referenzlichts und die Leistung $P_2'$ des ebenfalls zurückgelangenden Anteil des Meßlichts gemessen werden kann.

0101078

In der Ausführungsform nach Figur 1 weist die Auswerteeinrichtung zwei getrennte Detektoren $D_1$ und $D_2$ auf, von denen der Detektor $D_1$ für die Wellenlänge $\lambda_1$ des Referenzlichts und der Detektor $D_2$ für die Wellenlänge $\lambda_2$ des Meßlichts empfindlich ist. Zwischen den Detektoren und der Faser 40 ist ein faseroptischer Wellenlängen-Demultiplexer WDM angeordnet, der das Meßlicht von dem Referenzlicht trennt, so daß dem Detektor $D_1$ im wesentlichen nur das Referenzlicht und dem Detektor $D_2$ im wesentlichen nur das Meßlicht zugeführt wird. Ein anwendbarer Wellenlängen-Demultiplexer WDM ist weiter oben bereits angegeben worden.

Zur Erhöhung der Meßgenauigkeit ist zwischen dem Wellenlängen-Demultiplexer WDM und dem Detektor $D_1$ bzw. $D_2$ ein Schmalbandfilter $SF_1$ bzw. $SF_2$ angeordnet, das im wesentlichen nur die Wellenlänge des Referenzlichts bzw. Meßlichts durchläßt.

In der Ausführungsform nach Figur 2 besteht die Auswerteeinrichtung D aus zwei monolithisch in einen einzigen Halbleiterbaustein übereinander integrierten Dioden $D_1'$ und $D_2'$. Die obere Diode $D_1'$ ist für das Licht mit der kürzeren der beiden Wellenlängen $\lambda_1$, $\lambda_2$ transparent und nur für das Licht mit der längeren Wellenlänge empfindlich. Die notwendige Trennung des Lichts mit den unterschiedlichen Wellenlängen $\lambda_1$, $\lambda_2$ wird also in der Diodenanordnung D durchgeführt. Wie bereits erwähnt, sind derartige Diodenanordnung bekannt.

In der Ausführungsform nach Figur 3 besteht die Auswerteeinrichtung aus einem Spektrometer Spec.

Die Ausführungform nach Figur 4 unterscheidet sich von der Ausführungsform nach Figur 3 lediglich dadurch, daß zur Erzeugung des Meßlichts und des Referenzlichts eine einzige Lichtquelle S verwendet wird, die beide Wellenlängen $\lambda_1$ und $\lambda_2$ abstrahlt. Dieses Licht wird über die Faser 10 dem Verzweiger A zugeführt, der im Vergleich zu dem Verzweiger A nach Figur 3 keine Faser 20 aufweist, weil diese überflüssig ist.

Vorzugsweise wird für die Lichtquelle S eine Lumineszenzdiode mit großer Emissonshalbwertsbreite herangezogen. Passend zur spektralen Verteilung der Emission ist der Reflektor $R_v$ des Sensors 3 ausgebildet. Z. B. ist $R_v$ im Bereich des Emissionsmaximums der Sendediode S schmalbandig transparent und sonst hochreflektierend. Dieser Lichtanteil der Emission dient also zur Messung der Größe x. Der Spiegel $R_h$ reflektiert zumindest im Mittenbereich der Emission. Bei Beobachtung des zur Sende- und Empfangsstation 1 zurückkehrenden Lichtes mit dem Spektrometer Spec läßt sich in der Mitte des Spektrums eine von x abhängige Einsattelung feststellen. Aus dieser läßt sich die Meßgröße x bestimmen.

Es ist auch möglich, für $R_v$ statt des Schmalbandfilters ein Kantenfilter zu verwenden, derart, daß z.B. die linke Hälfte des Emissionsspektrums dem Referenzlicht und die rechte Hälfte dem Signal aus der Sensorzelle R zugeordnet wird.

Der Vorteil der Sende- und Empfangseinrichtung 1 nach Figur 4 besteht nicht nur in der Einfachheit. Alle Anteile des Lumineszenzdiodenspektrums liegen in einem verhältnismäßig engen Spektralbereich. Unterschiedliches Verhalten der Faserstrecke für Licht verschiedener Wellenlängen kommt deshalb hier nicht zum Tragen. Die Kompensation mit Hilfe des Referenzlichtes ist nahezu ideal.

Bei der Ausführungsform nach Figur 3 mit dem nicht wellenlängenselektiven Verzweiger A ist es auch möglich, die Lichtquellen $S_1$ und $S_2$, welche mit unterschiedlichen Wellenlängen emittieren, gepulst mit einem Zeitabstand zu betreiben. Dann ist für die Auswertung gar kein Spektrometer notwendig, und es muß nur der Zeitverlauf der rückkehrenden Signale analysiert werden, und zwar mit einer entsprechenden Einrichtung. Ähnlich wie bei der Einsattelung liefert hier der Unterschied zwischen den gemessenen Leistungen $P_1'$ und $P_2'$ eine Aussage über den aktuellen Wert der Meßgröße x. Abgesehen von dem einfachen Meßprinzip sind hier auch die in der Sende und Empfangsstation 1 auftretenden optischen Einfügeverluste sehr gering, es sind dies nämlich im wesentlichen nur die Verluste im Verzweiger A, d.h. für den Hin- und Rückweg insgesamt etwa 3 dB.

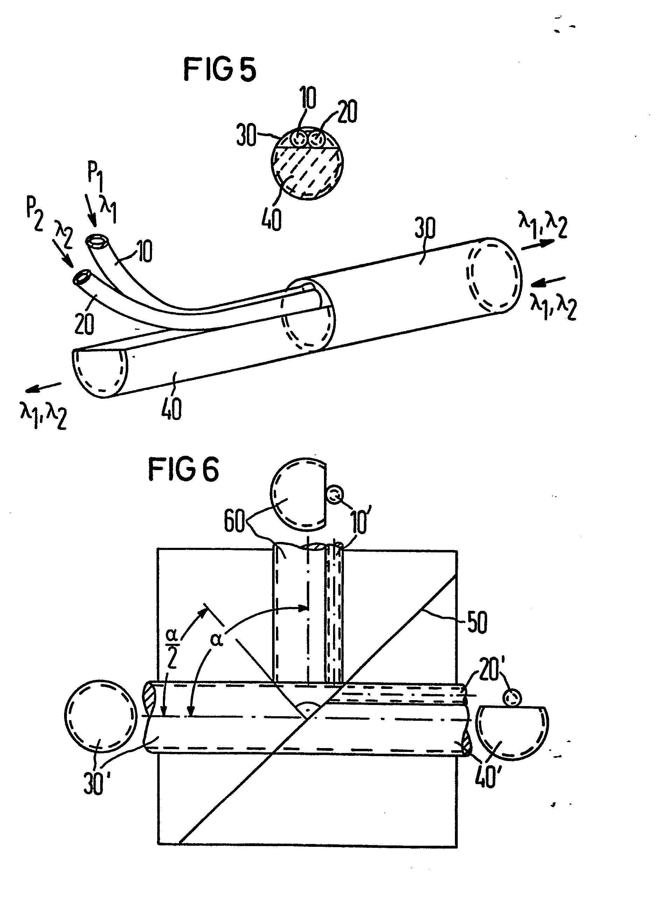

Für den Verzweiger A wird bevorzugt der in Figur 5 dargestellte asymmetrische Vier-Tor-Verzweiger verwendet, der eine dicke Faser 30 zur Ankopplung an die Faserstrecke 2, eine angeschliffene Faser 40 zur Auskopplung des vom Sensor 3 zurückkommenden Lichtes in Richtung der Auswerteeinrichtung und zwei dünnere Einkoppelfasern 10 bzw. 20 aufweist, die an die Lichtquellen $S_1$, $S_2$ anzukoppeln sind. Die angeschliffene dicke Faser 40 und die beiden dünneren Einkoppelfasern 10 und 20 sind an die ungeschliffene dicke Faser 30 stoßgekoppelt. Jeder der genannten Fasern ist je ein Tor des Verzweigers zugeordnet. Anstelle von zwei Einkoppelfasern könnte auch nur eine Einkoppelfaser, wie bei dem Verzweiger A in Figur 4, verwendet werden. Es könnten auch mehr als zwei Einkoppelfasern vorhanden sein.

Für faseroptische Sensorsysteme sind sog. Dickkernfasern mit beispielsweise einem Durchmesser des Faserkerns von 200 µm gut geeignet, insbesondere wegen der einfachen Verbindungstechnik und weil weder extrem große Übertragungslängen noch extrem hohe Datenraten auftreten. Deshalb wird der Kerndurchmesser der angeschliffenen Dickkernfaser 40 gleich dem Kerndurchmesser der ungeschliffenen Dickkernfaser 30 gewählt. Der Außendurchmesser der beiden dicken Fasern 30 und 40 kann beispielsweise 230 µm betragen. Die beiden dünneren Einkoppelfasern werden entsprechend Figur 5 so angebracht, daß sich für das in ihnen geführte Licht theoretisch ein Einkoppelverlust von 0 dB ergibt, und gleichzeitig noch die dem Kernquerschnitt der angeschliffenen dicken Faser 40 ensprechende Koppelfläche maximal ist. Einkoppelfasern 10, 20 mit Kerndurchmessern von 30 bis 50 µm und möglichst dünnem Mantel eignen sich gut zum Aufbau des Verzweigers nach Figur 5, weil sich mit ihnen auch noch gute Eingkoppelverhältnisse auf der Seite der Lichtquellen ergeben.

So wurde beispielsweise in Proc. Europ. Conf. Optical Commun., Kopenhagen (1981) 8.1-1 - 8.1-7 mitgeteilt, daß eine Änderung des Einkoppelwirkungsgrades für Licht von Laserdioden selbst bei Einkopplung in Gradientenfasern für Kernddurchmesser von 30 bis 50 µm nur gering ist, während hier nur an Stufenprofilfasern mit vom Koppelpunkt unabhängiger numerischer Apertur gedacht wird.

Bei Messungen an dreitoren asymmetrischen Abzweigen mit dicken Fasern von 200 µm Kerndurchmesser und 230 µm Außenddurchmessern und mit dünneren Fasern mit 45 µm Kerndurchmesser und 50 µm Außendurchmesser haben Auskoppelverluste von der ungeschliffenen dicken Faser zur angeschliffenen dicken Faser von etwa 2 dB ergeben. Dieser Wert liegt sehr nahe an den theoretisch sich ergebenden Verlusten für die Einkoppelverluste von einer dünneren Faser zur dicken ungeschliffenen Faser sind etwa 1 dB Verlust zu erwarten.

Für einen Verzweiger nach Figur 5 sind aus diesen
Gründen ähnliche Werte zu erwarten.

Wellenlängen-Demultiplexer-Bausteine weisen ohne bzw.
mit zusätzlichem Schmalbandfilter je Kanal Einfügeverluste von etwa 1,5 dB bzw. 3 dB auf, wobei die
Nebensprechdämpfung bei etwa 15 dB bzw. größer als
30 dB liegt. Für den Hin- und Rückweg sind daher in der
Sende- und Empfangsstation je Kanal Verluste zu
erwarten, die 6 dB nicht überschreiten. Dieser Wert
liegt deutlich unter dem Wert, der mit einer herkömmlichen Sende- und Empfangsstation erzielbar wäre.

Der in Figur 6 dargestellte neuartige Baustein faßt die
Funktionen der beiden Komponenten A und WDM der Sende-
und Empfangseinrichtung nach Figur 1 zusammen. Es
handelt sich um einen fünftorigen frequenzselektiven
Verzweiger-Baustein, für dessen Herstellung wieder die
in Appl. Opt. 20 (1981) S. 3128 - 3135 beschriebene
Technologie zweckmäßig ist. In Figur 6 ist mit 30' eine
Dickkern-Stufenprofilfaser bezeichnet, die an die
Faserstrecke 2 angekoppelt wird. Zum Zusammenführen bzw.
zur spektralen Aufteilung des Lichts mit den beiden
Wellenlängen $\lambda_1$ und $\lambda_2$ dient das dielektrische
Kantenfilter 50 (vergleiche dazu die vorstehend genannte
Literaturstelle), das zweckmäßig direkt auf die schräge
Faserstirnfläche aufgedampft wird. Der Winkel $\alpha$ zwischen
der Achse der Auskoppeldoppelfaser 10 mit 60 und der
Achse der ungeschliffenen dicken Faser 30' beträgt 90°
oder weniger. Die zeckmäßige Wahl hängt vom Kanalabstand $\Delta\lambda$
= $|\lambda_2 - \lambda_1|$ und der geforderten Nebensprechdämpfung
ab.

Im einzelnen sind bei dem Verzweiger nach Figur 6 zwei
dicke fluchtende Fasern 30' und 40' durch die schräg zu deren Achse angeordnete frequenzselektive Filterschicht 50 getrennt. Eine abzweigende dicke Faser 60 ist so angeordnet, daß aus der Dickkernfaser 30' ausgekoppeltes und an der Filterschicht 50 reflektiertes Licht in die abzweigende dicke Faser 60 eingekoppelt wird. Die andere dicke Faser 40' und die abzweigende dicke Faser 60 sind seitlich angeschliffen. An jede der beiden der Filterschicht 50 zugekehrten seitlich geschliffenen Flächen 41' bzw. 61 dieser beiden angeschliffenen dicken Fasern 40' und 60 sind achsparallele dünnere Einkoppelfasern 20' und 10' so angelegt, daß zwischen jeder dieser Einkoppelfasern und der ungeschliffenen dicken Faser 30' Licht durch die Filterschicht 50 oder durch Reflexion an dieser überkoppeln kann. Jeder der genannten Fasern ist je ein Tor des Verzweigers zugeordnet, d.h. es sind fünf Tore vorhanden.

Der Verzweiger nach Figur 6 wird in die Sende- und Empfangseinrichtung nach Figur 1 so angeordnet, daß an die ungeschliffene dicke Faser 30' die Faserstrecke 2, an die geschliffenen dicken Fasern 40' undd 60' die Detektoren $D_1$ und $D_2$ und an die Lichtquellen $S_1$ und $S_2$ die dünneren Fasern 10' und 20' angeschlossen sind. Die dickeren Fasern 30', 40' und 60 weisen beispielsweise einen Kerndurchmesser von 200 µm auf, während die dünneren Fasern 10' und 20' wieder einen Kerndurchmesser von etwa 30 bis 50 µm aufweisen.

Mit dem Baustein nach Figur 5 sind in der Sende- und Empfangseinrichtung nach Figur 1 insgesamt für Hin- und Rückweg Verluste je Kanal von etwa 4,5 dB zu erwarten. Mit zusätzlichen Schmalbandfiltern sind etwa 6 dB zu erwarten. Neben der günstigen Bilanz für die Verluste in der Sende- und Empfangseinrichtung ist der außerordentlich kompakte Aufbau des optischen Teiles bei Verwendung des Bausteins nach Figur 6 hervorzuheben.

15 Patentansprüche
6 Figuren

Patentansprüche

1. Sende- und Empfangseinrichtung für ein mit zwei Wellenlängen arbeitendes faseroptisches Sensorsystem, mit einem eine erste Wellenlänge abstrahlenden Sender und einem eine zweite Wellenlänge abstrahlenden Sender, wobei jede Wellenlänge einem senderseitigen Ende einer Faserstrecke des Sensorsystems zur Einkopplung zugeführt ist, und mit einer Auswerteeinrichtung zur Messung der Leistung einer von dem senderseitigen Ende der Faserstrecke der Auswerteeinrichtung zugeführten Strahlung mit der ersten Wellenlänge und zur Messung der Leistung einer von demselben Ende der Faserstrecke der Auswerteeinrichtung zugeführten Strahlung mit der zweiten Wellenlänge, d a d u r c h  g e k e n n - z e i c h n e t , daß die Sende- und Empfangseinrichtung (1) einen faseroptischen Lichtwellenleiter- Verzweiger (A) aufweist, der auf der Seite der Faserstrecke (2) ein Tor aufweist, an das die Faserstrecke (2) angekoppelt ist, und der auf der von der Faserstrecke (2) abgekehrten Seite pro Sender ($S_1$, $S_2$; S) je ein Tor aufweist, an das ein zugeordneter Sender angekoppelt ist, sowie ein der Auswertee- richtung ($D_1$, $D_2$; D; Spec) zugeordnetes Tor aufweist, mit dem die Auswerteeinrichtung verbunden ist.

2. Einrichtung nach Anspruch 1, d a d u r c h g e k e n n z e i c h n e t , daß die Auswerteein- richtung zwei getrennte Detektoren ($D_1$, $D_2$) aufweist, von denen einer für die erste Wellenlänge ($\lambda_1$) und der andere für die zweite Wellenlänge ($\lambda_2$) empfindlich ist, und daß zwischen dem der Auswerteeinrichtung zugeordneten Tor des Verzweigers (A) und den Detektoren ($D_1$, $D_2$) ein Lichtwellenleiter-Wellenlängen-Demultiplexer (WDM) angeordnet ist (Figur 1).

3. Einrichtung nach Anspruch 2, d a d u r c h g e k e n n z e i c h n e t , daß zwischen dem Wellenlängen-Demultiplexer (WDM) und einem Detektor ($D_1$, $D_2$) ein Schmalbandfilter $SF_1$, $SF_2$) angeordnet ist, das im wesentlichen nur die Wellenlänge durchläßt, für die der betreffende Detektor empfindlich ist.

4. Einrichtung nach Anspruch 2 oder 3, d a d u r c h g e k e n n z e i c h n e t , daß der Verzweiger (A) und der Wellenlängen-Demultiplexer (WDM) als ein einziger fünftoriger wellenlängenselektiver Lichtwellenleiter-Verzweiger ausgebildet ist.

5. Einrichtung nach Anspruch 1, d a d u r c h g e k e n n z e i c h n e t , daß die Auswerteein-richtung (D) zwei monolithisch in einem einzigen Halb-leiterbaustein übereinander integrierte Dioden ($D_1'$, $D_2'$) aufweist, von denen die an das der Auswerteeinrichtung zugeordnete Tor des Verzweigers (A) gekoppelte obere Diode ($D_1'$) nur für eine der beiden Wellenlängen ($\lambda_1$, $\lambda_2$) empfindlich und für die andere Wellenlänge transparent ist (Figur 2).

6. Einrichtung nach Anspruch 4, d a d u r c h g e k e n n z e i c h n e t , daß die obere Diode ($D_1'$) für die kürzere der beiden Wellenlängen ($\lambda_1$, $\lambda_2$) transparent ist.

7. Einrichtung nach Anspruch 1, d a d u r c h g e k e n n z e i c h n e t , daß die Auswerteein-richtung aus einem Spektrometer (Spec) (oder einer den Zeitverlauf der zugeführten Signale analysierende Einrichtung) besteht, welches bzw. welche an das der Auswerteeinrichtung zugeordnete Tor des faseroptischen Verzweigers angeschlossen ist (Figur 3, 4).

8. Einrichtung nach Anspruch 7, d a d u r c h
g e k e n n z e i c h n e t , daß zur Erzeugung der
Strahlung mit der ersten Wellenlänge und der Strahlung
mit der zweiten Wellenlänge ein einziger Sender (S) verwendet wird, der beide Wellenlängen abstrahlt.

9. Einrichtung nach Anspruch 9, d a d u r c h
g e k e n n z e i c h n e t , daß der einzige Sender
aus einer Lumineszenzdiode mit großer
Emissionshalbwertsbreite besteht.

10. Faseroptischer Verzweiger, insbesondere für eine
Sende- und Empfangseinrichtung nach einem der Ansprüche
1 bis 3 oder 5 bis 7, g e k e n n z e i c h n e t
d u r c h  zwei stoßgekoppelte dicke Fasern (30, 40)
von denen die eine (40) seitlich angeschliffen ist und
durch eine oder mehrere an die seitliche geschliffene
Fläche (41) der einen dicken Faser (40) angelegte
dünnere Fasern (10, 20), die ebenfalls mit der
ungeschliffenen dicken Faser (30) stoßgekoppelt sind,
wobei jeder der genannten Fasern (10 bis 40) je ein Tor
des Verzweigers zugeordnet ist (Figur 5).

11. Faseroptischer Verzweiger nach Anspruch 10 für eine
Sende- und Empfangseinrichtung nach einem der Ansprüche
1 bis 3 oder 5 bis 7, d a d u r c h  g e k e n n z e i ch-
n e t , daß an die ungeschliffene dicke Faser
(30) die Faserstrecke (2), an jede vorhandene dünnere
Faser (10, 20) je ein Sender ($S_1$, $S_2$; S) und an die
angeschliffene dicke Faser (40) die Auswerteeinrichtung
des Sensorsystems anzukoppeln ist.

12. Fünftoriger wellenlängenselektiver Verzweiger,
insbesondere für eine Sende- und Empfangseinrichtung
nach Anspruch 4, g e k e n n z e i c h n e t

durch einen faseroptischen Verzweiger nach dem Strahlteilerprinzip, bei dem zwei dicke, fluchtende Fasern (30', 40') durch eine schräg zu deren Achse angeordnete frequenzselektive Filterschicht (50) getrennt sind, bei dem eine abzweigende dicke Faser (60) so angeordnet ist, daß eine aus einer (30') der beiden fluchtenden dicken Fasern ausgekoppelte und an der Filterschicht (50) reflektierte Strahlung in die abzweigende dicke Faser (60) eingekoppelt wird, bei dem die andere (40') der beiden fluchtenden dicken Fasern (30', 40') und die abzweigende dicke Faser (60) seitlich angeschliffen sind, und daß an jede der beiden, der Filterschicht (50) zugekehrten seitlich geschliffenen Flächen (41', 61) dieser beiden angeschliffenen dicken beiden Fasern (40', 60) achsparallele dünnere Fasern (20', 10') so angelegt sind, daß zwischen jeder dieser dünneren Faser (20', 10') und der einen ungeschliffenen dicken Faser (30') Strahlung durch die Filterschicht oder durch Reflexion an dieser überkoppeln kann, wobei jeder der genannten Fasern (10', 20', 30', 40' und 60) je ein Tor des Verzweigers zugeordnet ist (Figur 6).

13. Verzweiger nach Anspruch 12 für eine Sende- und Empfangseinrichtung nach Anspruch 4, d a d u r c h g e k e n n z e i c h n e t , daß an die ungeschliffene dicke Faser (30') die Faserstrecke (2), an die geschliffenen dicken Fasern (40', 60) die Detektoren ($D_1$, $D_2$) und an die bzw. eine der dünneren Fasern (20', 10') die Sender ($S_1$, $S_2$) bzw. der eine Sender (S) angeschlossen sind.

14. Verzweiger nach einem der Ansprüche 10 bis 13, d a d u r c h g e k e n n z e i c h n e t , daß eine dicke Faser (30', 40', 60) aus einer Dickkernfaser mit einem Kerndurchmesser von 150 μm bis 250 μm und eine

dünnere Faser (10', 20') aus einer Kern-Mantel-Faser mit einem Durchmesser von 20 µm bis 60 µm besteht.

15. Verzweiger nach einem der Ansprüche 10 bis 14, d a d u r c h   g e k e n n z e i c h n e t , daß die geschliffene plane Fläche (41, 41', 61) einer dicken Faser (30, 40, 30', 40', 60) achsparallel ist.

0101078

1/2

FIG 1

FIG 2

FIG 3

FIG 4

FIG 5

FIG 6